Europäisches Patentamt

European Patent Office

Office européen des brevets

(19)

(11) Veröffentlichungsnummer: **0 314 142 B1**

(12) **EUROPÄISCHE PATENTSCHRIFT**

(45) Veröffentlichungstag der Patentschrift: **23.12.92**

(51) Int. Cl.⁵: **C04B 35/56**, C04B 33/28, C04B 38/06

(21) Anmeldenummer: **88117943.6**

(22) Anmeldetag: **27.10.88**

(54) **Verfahren zur Herstellung eines porösen Formkörpers.**

(30) Priorität: **29.10.87 DE 3736660**

(43) Veröffentlichungstag der Anmeldung:
**03.05.89 Patentblatt 89/18**

(45) Bekanntmachung des Hinweises auf die
Patenterteilung:
**23.12.92 Patentblatt 92/52**

(84) Benannte Vertragsstaaten:
**AT CH DE FR GB LI**

(56) Entgegenhaltungen:
DE-A- 2 627 856
DE-A- 3 005 587
DE-A- 3 516 587

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Hauptmann, Holger
Elsternweg 44
W-8047 Karlsfeld(DE)**
Erfinder: **Andrees, Gerhard
Paosostrasse 59
W-8000 München 60(DE)**

**Beschreibung**

Die Erfindung betrifft ein Verfahren zur Herstellung eines porösen Formkörpers aus gesintertem SiC.

Im Stand der Technik sind vielfältige Verfahren zur Herstellung von Formkörpern aus gesintertem SiC bekannt. Hierbei ist es jedoch Aufgabe, eine möglichst dichte, d.h. unporöse Formkörperwandung zu erzielen, insbesondere um die an den Poren auftretenden Spannungsspitzen bei Belastungen und die dadurch verursachten verminderten Festigkeiten zu verhindern. Bei dem bekannten Verfahren wird sinteraktives SiC in $\alpha$-oder $\beta$-Modifikation mittels Preß-, Spritz- oder Schlämmverfahren auf oder in Negativformen gebracht. Anschließend wird der Formkörper gesintert, wodurch Formkörper geringer Porosität erzielbar sind, die die vorteilhaften Eigenschaften der Keramiken wie hohe Temperaturfestigkeit besitzen.

Versuche, gezielt poröse Formkörper der Keramiken herzustellen, die einen geringen Strömungswiderstand und keine allzu niedrige Festigkeit ausweisen, führten bisher nicht zu den gewünschten Ergebnissen. Nachteilig ist vor allem, daß die Porosität großen Teils aus geschlossenen Hohlräumen besteht, wodurch sich schlechte Durchströmbarkeit ergibt.

Hiervon ausgehend ist es Aufgabe der Erfindung, einen Formkörper hoher Porosität aus gesinterten SiC zu schaffen, wobei gleichzeitig eine vergleichsweise hohe Festigkeit gewährleistet wird und gezielte Werte für dessen Porosität erzielbar sind.

Erfindungsgemäß wird die Aufgabe gemäß den Verfahrensschritten des Patentanspruchs 1 oder 2 gelöst. Vorteilhafte Weiterbildungen der Erfindung ergeben sich aus den Unteransprüchen.

Das erfindungsgemäße Herstellungsverfahren für poröse Formkörper zeichnet sich insbesondere dadurch aus, daß der Formkörper aus einer Vielzahl von etwa runden Partikeln aufgebaut ist, wobei die Partikel während des Formgebungs- und Sintervorganges ihre Gestalt im wesentlichen beibehalten. Hierdurch ist ein Labyrinth von Hohlräumen vorhanden, das durch eine große durchgängige Porosität mit geringem Strömungswiderstand gekennzeichnet ist.

Dies ist besonders vorteilhaft im Gegensatz zu den im Stand der Technik erzielbaren Porositäten, wo aufgrund der geringen Partikelgröße des SiC-Pulvers zwar einzelne Poren verbleiben, jedoch diese voneinander im wesentlichen isolierte Hohlräume darstellen, wodurch ein Durchströmen der Wandung nur bei großen Strömungsverlusten möglich ist, oder andererseits eine derart geringe Dichte erzielbar ist, daß die Festigkeit aufgrund der Vielzahl dünner Verbindungsstege zwischen den Poren sehr begrenzt ist.

Erst die gemäß des erfindungsgemäßen Verfahrens hergestellten porösen Formkörper ermöglichen den Einsatz von Keramiken in technischen Bereichen, die poröse Materialien bei hohen Temperaturen erfordern.

Beispielsweise sind derartige Formkörper einsetzbar für thermisch hoch beanspruchte Luftlager, vorzugsweise bei Turboladern oder als Hochtemperaturfilter für Heißgase, insbesondere mit aggressiven Bestandteilen wie Säuren und Laugen oder Feststoffpartikeln wie Ruß.

Vorteilhafterweise läßt sich auch die Temperaturwechselbeständigkeit für Hochtemperaturanwendungen erhöhen. Dies tritt am ausgeprägtesten bei einer Porosität von etwa 20% auf. Als Anwendung hierfür eignen sich Brennkammerwandungen, wobei zur Gasabdichtung zusätzliche Feinschichten aufgebracht werden.

Gemäß einer Ausführung der Erfindung wird der poröse Formkörper aus SiC dadurch erhalten, daß sinteraktives SiC-Pulver mit einer spezifischen Oberfläche von 10-50m²/g in einem Lösungsmittel und mit einem Bindemittel suspendiert ist. Das Pulver hat üblicherweise eine Teilchengröße kleiner 10µm. Dem Pulver sind Kohlenstoff-Spender, vorzugsweise in einer Menge von 0,5-5% hinzuzugeben, wodurch eine um die SiC-Partikel gebildete $SiO_2$-Glasschicht durch Bildung von Kohlenoxiden reduziert wird. Weiterhin sind Bor- und/oder Aluminium-Additive enthalten, wodurch gewünschte Kornausbildungen erzielbar sind. Ferner unterstützen derartige Additive den Sinterprozeß. Das Pulver wird mit Wasser und Alkohol oder einer Mischung dieser Mittel mit anderen organischen Lösungsmitteln zur Bildung einer Suspension aufgeschlämmt. Dabei wird ein geeignetes Lösungsmittel ausgewählt, das sich im Vakuum oder unter Wärmeeinwirkung leicht verflüchtigen kann. Zu dem Lösungsmittel werden Bindemittel wie Phenolharze oder Polyvinylalkohole gegeben, wodurch verhindert wird, daß bei den nach dem Zerstäuben eintretenden Austrocknen die gebildeten Tröpfchen wieder in die ursprünglichen SiC-Partikel zerfallen. Hierfür eignen sich auch Mehrkomponentenharze, die schnell reagieren. Vorzugsweise werden durch das Harz des Bindemittelsystems welches gemäß Anspruch 4 zusammengesetzt ist die Kohlenstoff-Spender bereitgestellt.

Mittels eines Zerstäubungsverfahrens wird anschließend die Suspension in Tröpfchenform gebracht und es werden die Tröpfchen an der Oberfläche getrocknet. Die Trocknung erfolgt entweder durch Einblasen in Heißgasatmosphäre oder es werden mittels Infrarot- bzw. Mikrowellenstrahlung die Tröpfchen erwärmt, so daß ein Teil des Lösungsmittels verdampft und die Außenkontur der Körner sich verfestigt. Es ist auch denkbar, beide Trockenverfahren zu kombinieren. Hierbei werden die getrockneten Tröpfchen in ihrer Form stabilisiert, d.h. sie behalten bei einem Aufprall ihre Form in etwa bei.

Beim Zerstäuben wird in den Partikelstrahl eine Negativform des Formkörpers gebracht, und gleichmäßig beschichtet. Die Negativform, die vorzugsweise vorgewärmt ist, um den Trockenvorgang zu unterstützen, wird im Sprühnebel bewegt um eine gleichmäßige Schicht aufzubauen. Durch den Flüssigkeitsentzug in den Tröpfchen wird dabei die Viskosität soweit erhöht, daß das Granulat weitgehend formstabil bleibt, sich aber beim Kontakt mit anderen Teilchen noch zu einem Formkörper verbindet. Dabei kann die Tröpfchengröße über die Suspensionsviskosität, den Feststoffgehalt, den Zerstäubungsdruck oder die Düsenöffnung in weiten Grenzen eingestellt werden, wodurch auch die mehr oder weniger offene Struktur (Porengrößenverteilung) des Formkörpers variiert werden kann.

Die so erhaltene Schicht wird weiter getrocknet und nach Erreichen ausreichender Grundfestigkeit entfernt und einem Sinterprozeß unterzogen.

Gemäß einer alternativen Ausführung der Erfindung wird der Formkörper dadurch erhalten, daß sinteraktives SiC-Pulver mit vorzugsweise 0,5-5% freiem Kohlenstoff und Aluminium- oder Bor-Additiven, die vorzugsweise eine spezifische Oberfläche von 10-20$m^2$/g aufweisen, in einem Lösungsmittel und einem Bindemittel suspendiert wird. Insbesondere soll bei den nachfolgenden Verfahrensschritten das Bindemittelsystem weder in Lösung gehen, noch quellen oder erweichen und muß dem Granulat bei einer Formgebung durch Druck ausreichende Festigkeit verleihen. Hierfür eignen sich besonders Phenolharze oder Polyvinylalkohole. Die Additive liegen vorzugsweise im Bereich von 0,1-1,5% vor.

Anschließend wird mittels üblicher Granulationsverfahren die Suspension in kugelige Körner (Granulat) umgewandelt. Als Granulationsverfahren eignet sich das Sprühtrocknen, Pelletieren oder andere bekannte Verfahren. Hierdurch wird die SiC-Suspension in etwa kugelige Körper gebracht, die einen erheblich größeren Durchmesser bzw. kleinere Oberfläche haben als das Ausgangspulver.

Das Granulat wird durch Hinzugabe von Hilfsmitteln zu einer preß- oder gußfähigen Masse aufgearbeitet. Als Plastifizierhilfsmittel eignen sich eines oder mehrere der nachfolgenden Mittel: Wachse, Polyethylenglycole, Polyvinylalkohole, Carboxyl-Methylzellulosen, Galacto-Mannosen, Metha-Acrylate, Sacchorosen, Polystyrol, wobei die Anwendung und Zusammensetzung vorzugsweise entsprechend den Ansprüchen 9 - 11 erfolgt. Die Aufarbeitung geschieht vorzugsweise in einem Knetmischer. Hierdurch wird zugleich erreicht, daß das gebildete Granulat eine hohe Druckstabilität besitzt, sich also nicht bei aufgebrachtem Druck sogleich verformt. Dabei sind das Plastifizierhilfsmittel und Bindemittel so aufeinander abgestimmt, daß dadurch weder eine physikalische noch eine chemische Reaktion auftritt, d.h. sich das Granulat nicht mehr erweicht, sondern seine kugelige Gestalt beibehält.

Anschließend kann je nach Anforderung aus der Masse mittels Preßverfahren oder Schlickerguß der Formkörper gebildet werden. Preßverfahren eignen sich vor allem für geometrisch einfache Körper, beispielsweise Trockenpressen. Mittels Schlickerguß können komplizierte Bauteile sowohl im Hohl- wie auch im Vollguß wirtschaftlich hergestellt werden. Dabei kann dieses drucklos oder gemäß Anspruch 12 unter Druck geschehen. Es können auch beide Verfahren kombiniert werden. Bei der Herstellung poröser Formkörper durch dieses Formgebungsverfahren können die gleichen Elektrolyte zur Viskositätsregelung, Binde- und Stellmittel verwendet werden wie zur Herstellung von dichtem SiC-Material.

Je nach Zugabe der Bindemittel können Endlosprofile extrudiert oder kompliziert geformte Einzelteile spritzgegossen werden.

Vorzugsweise wird im Anschluß an das Granulationsverfahren eine Wärmebehandlung des Granulats angeschlossen, wodurch das verwendete Harz ausgehärtet oder das SiC durch höhere Temperatur vorgesintert wird. Dadurch wird eine größere Druckstabilität des Granulats erreicht.

In weiterer vorteilhafter Ausgestaltung der Erfindung werden durch die Einbringung von Fremdpartikel Platzhalter für größere Poren eingebracht, wobei die Fremdpartikel in nachfolgenden Wärmebehandlungsschritten während des Ausheiz- bzw. Sintervorganges wieder entfernt werden. Die Einbringung des Platzhaltermaterials geschieht gleichzeitig mit der Formkörperwanderzeugung oder wird zwischenzeitlich durchgeführt. Bei der Verwendung eines Zerstäubungsverfahrens kann das Platzhaltermaterial vorzugsweise durch eine zweite parallel angeordnete Zerstäubungsdüse aufgebracht werden. Als Material eignen sich insbesondere Ammoncarbonate, Wachskugeln, Kunststoffkugeln, Sägemehl oder Graphitpartikel.

Die Erfindung wird nachfolgend anhand zweier bevorzugter Ausführungsbeispiele weiter erläutert.

Beispiel 1

Ein Versatz (in Gew.-%) bestehend aus

| α-SiC (mittl. Korngröße 0,5μm) | 50,0 |
|---|---|
| Bor amorph | 0,3 |
| Phenolharz/Novolake-typ | 2,0 |
| Aceton | 6,0 |
| Ammoniak-Lösung (25%ig) | 6,4 |
| Vollentsalztes Wasser | 30,3 |
| Polyvinylalkohol | 5,0 |

wurde homogenisiert.

Die so erhaltene Suspension wurde mit einer stationären 2-Stoff-Düse versprüht. Als Negativform wurde ein Metallkonus verwendet, der im Heißgasstrom vorgewärmt wurde. Der Konus wurde nun unter ständigem Drehen in den Sprühnebel gebracht. Die Heißgastemperatur betrug ca. 240°C, der Abstand Form-Düse ca. 80cm. Nach dem die gewünschte Formwandungsstärke erreicht war, wurde der Formkörper im Heißgasstrom weiter getrocknet. Der Formling konnte nun vom Metallkern abgehoben, ausgebrannt und gesintert werden. Das Ausbrennen der Bindemittel bei gleichzeitigem verkoken der Kohlenstoff-Spender fand im Grobvakuum mit einer Aufheizrate von 1K/min und $T_{max} = 600°C$ statt. Der Sinterprozeß wurde in Argon-Atmosphäre bei $T_{max} = 2100°C$ und mit einer Haltezeit von 5 min durchgeführt.

Beispiel 2

Ein Versatz (in Gew.-%) bestehend aus

| α-SiC (mittl. Korndurchmesser 0,5μm) | 93,6 |
|---|---|
| Bor amorph | 0,4 |
| Phenolharz | 6,0 |

wird mit einem Wasser-Acetongemisch zu einer pumpfähigen Suspension mit dem Litergewicht von 1,75 kg/l aufbereitet. Diese Suspension wurde in einem Sprühturm eingedüst und die Tröpfchen durch Heißgas getrocknet. Der Harzanteil im Granulat wurde in einer rotierenden heizbaren Trommel bei 160°C ausgehärtet und anschließend wurde eine Granulatfraktion mit mehr als 90μm Durchmesser ausgesiebt.

Von dieser Fraktion wurden 40 Gew.-Teile mit 3,0 Gew.-Teile Galacto-Mannose, 24% PE-Wax mit 90-250μm Partikelgröße als Platzhalterelemente, und 30 Gew.-Teile vollentsalztem Wasser in einem Knetmischer zu einer plastischen Masse verarbeitet. Diese Masse wurde über eine Vakuumstrangpresse zu Röhrchen mit 10 mm Außendruckmesser und 8 mm Innendruckmesser extrudiert. Diese Röhrchen wurden mit 1K/min auf 600°C aufgeheizt und dabei die C-Spender verkokt. Im anschließenden Sinterprozeß bekamen die Formlinge bei 2100°C in Argon-Atmosphäre ihre Endfestigkeit.

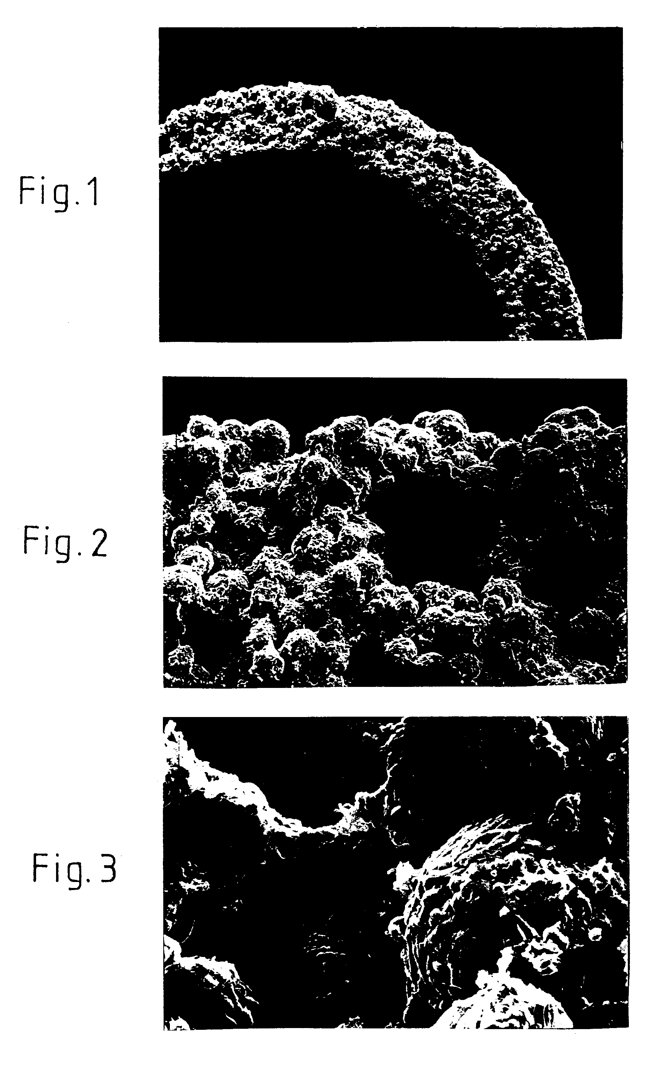

Die Erfindung wird nachfolgend anhand der beigefügten Abbildungen weiter erläutert: Fig. 1 zeigt dabei in 20-facher Vergrößerung ein mittels des erfindungsgemäßen, insbesondere des in Beispiel 2 angegebenen Verfahrens hergestelltes Röhrchen, das eine poröse Wandung aufweist. Fig. 2 zeigt in 100-facher Vergrößerung einen Ausschnitt gemäß Fig. 1, bei dem zu erkennen ist, daß die Wand aus einer Vielzahl kugelförmiger SiC-Partikel aufgebaut ist, zwischen denen ein vernetztes System von Hohlräumen bestehen bleibt.

Fig. 3 zeigt in 500-facher Vergrößerung einen Bildausschnitt gemäß Fig. 2, bei dem einzelne kugelförmige Partikel und die Hohlräume dargestellt sind.

Die Porosität der gezeigten Röhrchenwandung erlaubt bei einem Druckgefälle von 100 mbar beidseits derselben einen Gasfluß von 7 l/cm²min.

**Patentansprüche**

**1.** Verfahren zur Herstellung eines porösen Formkörpers aus gesintertem SiC, bei dem
   a) sinteraktives SiC-Pulver mit freien Kohlenstoff- und Aluminium- und/oder Bor-Additiven in einem Lösemittel mit einem Bindemittel suspendiert wird,
   b) mittels Zerstäubungsverfahren aus der Suspension Tröpfchen einer Größe gebildet werden, die erheblich über der Pulverpartikelgröße liegt,
   c) im Zerstäubungsstrahl aus den Tröpfchen durch Trocknung ein formstabiles Granulat mit kugelförmigen Körnern hergestellt wird,

d) in den Granulatstrahl eine Negativform des Formkörpers eingebracht und mit dem Granulat gleichmäßig beschichtet wird, wobei die Körner unter Beibehaltung ihrer Kugelgestalt aneinander und an der Negativform haften,

e) die so erhaltene Schicht getrocknet und nach Erreichen ausreichender Grundfestigkeit von der Negativform entfernt und einem Sinterprozeß unterzogen wird.

2. Verfahren zur Herstellung eines porösen Formkörpers aus gesinterten SiC mit den Verfahrensstufen a) bis c) des Anspruchs 1, bei dem

d) das Granulat durch Zugabe eines Plastifizierungsmittels, das mit dem Bindemittel aus Stufe a) keine chemische Reaktion eingeht und das das Bindemittel nicht löst, erweicht oder quellen läßt, zu einer preß- oder gießfähigen Masse aufgearbeitet wird,

e) aus der Masse mittels Pressen oder Schlickerguß ein Grünkörper gebildet wird,

f) der Grünkörper weiter getrocknet und nach Erreichen ausreichender Grünfestigkeit gesintert wird.

3. Verfahren nach Anspruch 1 oder 2, dadurch gekennzeichnet, daß als Lösungsmittel Wasser oder organische Lösungsmittel oder eine Mischung hiervon verwendet wird.

4. Verfahren nach Anspruch 1 oder 2, dadurch gekennzeichnet, daß als Bindemittel Harze oder eine Mischung aus Harzen und Gleitmittel verwendet werden.

5. Verfahren nach Anspruch 1 oder 2, dadurch gekennzeichnet, daß als Bindemittel Phenolharz oder Polyvinylalkohol verwendet wird.

6. Verfahren nach Anspruch 2, dadurch gekennzeichnet, daß im Anschluß an das Granulationsverfahren eine Wärmebehandlung des Granulats zur Aushärtung oder zur Vorsinterung angeschlossen wird.

7. Verfahren nach Anspruch 2, dadurch gekennzeichnet, daß das Granulat mittels Siebung in gezielte Partikelgrößen selektiert wird.

8. Verfahren nach Anspruch 2, dadurch gekennzeichnet, daß als Plastifizierhilfsmittel eines oder mehrere der folgenden Mittel verwendet werden: Wachse, Polyethylenglycole, Carboxyl-Methylzellulosen, Galacto-Mannosen, Methacrylate, Saccharosen, Polystyrol.

9. Verfahren nach Anspruch 8, dadurch gekennzeichnet, daß die Mittel zusammen mit Wasser oder organischen Lösungsmitteln verwendet werden.

10. Verfahren nach Anspruch 8, dadurch gekennzeichnet, daß 1-4% (Gew.) Galacto-Mannosen mit 20-26% (Gew.) Wasser und 70-79% (Gew.) SiC-Pulver vermengt wird.

11. Verfahren nach Anspruch 8, dadurch gekennzeichnet, daß zu 94-97% (Gew.) sinteraktivem SiC-Granulat ein 1-2% (Gew.) Polyvinylalkohol und 2-5% (Gew.) Wasser gegeben werden.

12. Verfahren nach Anspruch 2, dadurch gekennzeichnet, daß als Schlickergußverfahren das Druckschlickergußverfahren angewandt wird.

13. Verfahren nach Anspruch 1 oder 2, dadurch gekennzeichnet, daß gleichzeitig oder zwischenzeitlich mit der Formkörperwanderzeugung Platzhalter für größere Poren durch Einbringung von Material erzeugt werden, wobei das Material in nachfolgenden Wärmebehandlungsschritten wieder entfernt wird.

14. Verfahren nach Anspruch 13, dadurch gekennzeichnet, daß als Platzhalter-Material Ammoncarbonate, Wachskugeln, Kunststoffkugeln, Sägemehl oder Graphitpartikel verwendet werden.

15. Verfahren nach Anspruch 1 oder 2, dadurch gekennzeichnet, daß nach Bildung des Formkörpers und vor dem Sintern dieser einem Ausheiz- und Verkokungsprozeß bei Temperaturen unterhalb 600°C und unter Vakuum unterzogen wird.

16. Verfahren nach Anspruch 1, dadurch gekennzeichnet, daß 0,5-5% freier Kohlenstoff verwendet wird.

**17.** Verfahren nach Anspruch 1, dadurch gekennzeichnet, daß 0,1-1,5% Aluminium und/oder Bor-Additive verwendet werden.

**18.** Verfahren nach Anspruch 17, dadurch gekennzeichnet, daß die Additive eine spezifische Oberfläche von 10-20 m$^2$/g aufweisen.

**Claims**

**1.** Process for the production of a porous shaped body of sintered SiC, in the case of which

a) SiC powder with a sintering effect is suspended with free carbon and aluminium and/or boron additives in a solvent with a binding agent;

b) drops of an equal size, which is substantially greater than the size of the powder particles, are formed from the suspension by means of a spraying process;

c) in the jet, a granulated material that is stable in shape, and has round grains, is produced from the drops by drying;

d) a negative mould of the shaped body is introduced into the jet of granulated material and evenly coated with the granulated material, wherein the grains, whilst retaining their round form, adhere to one another and to the negative mould;

e) the layer obtained in this way is dried, and, after having achieved sufficient basic stability, is separated from the negative mould and subjected to a sintering process.

**2.** Process for the production of a porous shaped body of sintered SiC using the processing stages a) to c) of Claim 1, in which;

d) the granulated material is prepared as a mass that may be pressed or poured, by the addition of a plasticizing agent which is not subjected to a chemical reaction with the binding agent from stage a) and which does not dissolve the binding agent, soften it or allow it to swell;

e) a basic body is formed from the mass by means of pressing or slip casting;

f) the basic body is further dried, and, when sufficient basic stability is achieved, sintered.

**3.** Process according to Claim 1 or 2,
characterised in that water or organic solvents or a mixture thereof is used as the solvent.

**4.** Process according to Claim 1 or 2,
characterised in that resins or a mixture of resins and lubricants are used as the binding agent.

**5.** Process according to Claim 1 or 2,
characterised in that phenol resin or polyvinylalcohol is used as the binding agent.

**6.** Process according to Claim 2,
characterised in that a heat treatment of the granulated material, for hardening or presintering, follows the granulation process.

**7.** Process according to Claim 2,
characterised in that the granulated material is divided into predetermined particle sizes by means of sieving.

**8.** Process according to Claim 2,
characterised in that one or more of the following agents are used as the agent for aiding plasticisation: waxes, polyethyleneglycols, carboxyl-methylcelluloses, galacto-mannoses, methacrylate, sucroses, polystyrene.

**9.** Process according to Claim 8,
characterised in that the agents are used together with water or organic solvents.

**10.** Process according to Claim 8,
characterised in that 1-4% (weight) of galacto-mannoses is mixed with 20-26% (weight) of water and 70-79% (weight) of SiC powder.

**11.** Process according to Claim 8,
characterised in that 1-2% (weight) of polyvinylalcohol and 2-5% (weight) of water are added to 94-97% (weight) of SiC granulated material with a sintering effect.

**12.** Process according to Claim 2,
characterised in that pressure slip casting is used as the slip casting process.

**13.** Process according to Claim 1 or 2,
characterised in that, simultaneously with the creation of the walls of the shaped body, or in the interim devices for retaining large pores are generated by the introduction of material, wherein the material is removed again in the subsequent heat treating stages.

**14.** Process according to Claim 13,
characterised in that ammonium carbonates, wax balls, plastic balls, sawdust or graphite particles are used as the material for the retaining devices.

**15.** Process according to Claim 1 or 2,
characterised in that after the forming of the shaped body and before the sintering, this is subjected to a heating and drying process at temperatures of below 600° C and under a vacuum.

**16.** Process according to Claim 1,
characterised in that 0.5-5% of free carbon is used.

**17.** Process according to Claim 1,
characterised in that 0.1-1.5% of aluminium and/or boron additives are used.

**18.** Process according to Claim 17,
characterised in that the additives have a specific surface of from 10-20 $m^2$/g.

**Revendications**

**1.** Procédé pour la fabrication d'un corps moulé poreux à partir de SiC fritté, dans lequel
a) on met de la poudre de SiC frittable en suspension avec du carbone libre et des additifs à base d'aluminium et/ou de bore, dans un solvant avec un liant,
b) on forme à partir de la suspension, à l'aide d'un procédé de pulvérisation, des gouttelettes ayant une taille qui est considérablement supérieure à la taille des particules de la poudre,
c) dans le jet de pulvérisation on obtient par chauffage, à partir des gouttelettes, un produit granulé indéformable à grains sphériques,
d) un moule négatif du corps moulé est inséré dans le courant de produit granulé et revêtu uniformément avec le produit granulé, les grains adhérant les uns aux autres, en conservant leur forme sphérique, et au moule négatif,
e) la couche ainsi obtenue est séchée, et, une fois atteinte la résistance à cru suffisante, retirée du moule négatif puis soumise à un processus de frittage.

**2.** Procédé pour la fabrication d'un corps moulé poreux à partir de SiC fritté, avec les étapes de procédé a) à c) de la revendication 1, dans lequel
d) on transforme le produit granulé, par addition d'un agent de plastification, qui n'entre pas en réaction chimique avec le liant de l'étape a) et qui ne dissout pas ni ne fait ramollir ni ne fait gonfler le liant, pour obtenir une masse apte à la compression ou à la coulée,
e) à partir de la masse, on forme par compression ou coulée de barbotine un corps cru,
f) le corps cru est séché davantage et fritté, une fois atteinte une résistance à cru suffisante.

**3.** Procédé selon la revendication 1 ou 2, caractérisé en ce que, comme solvant, on utilise l'eau ou des solvants organiques, ou un mélange de ceux-ci.

**4.** Procédé selon la revendication 1 ou 2, caractérisé en ce que, comme liant, on utilise des résines ou un mélange de résines et de lubrifiants.

7

**5.** Procédé selon la revendication 1 ou 2, caractérisé en ce que, comme liant, on utilise une résine phénolique ou un poly(alcool vinylique).

**6.** Procédé selon la revendication 2, caractérisé en ce que, au processus de granulation, fait suite un traitement thermique du produit granulé pour le durcissement ou pour le préfrittage.

**7.** Procédé selon la revendication 2, caractérisé en ce que le produit granulé est sélectionné par tamisage en tailles de particules désirées.

**8.** Procédé selon la revendication 2, caractérisé en ce que, comme agent auxiliaire de plastification, on utilise un ou plusieurs des agents suivants: cires, polyéthylèneglycols, carboxyméthylcelluloses, galactomannoses, méthacrylates, saccharoses, polystyrène.

**9.** Procédé selon la revendication 8, caractérisé en ce que l'on utilise les agents conjointement avec de l'eau ou des solvants organiques.

**10.** Procédé selon la revendication 8, caractérisé en ce que l'on mélange 1 - 4 % (en poids) de galactomannoses avec 20 - 26 % (en poids) d'eau et 70 - 79 % (en poids) de poudre de SiC.

**11.** Procédé selon la revendication 8, caractérisé en ce que, à 94 -97 % (en poids) de produit granulé à base de SiC frittable, on ajoute 1 - 2 % (en poids) de poly(alcool vinylique) et 2 - 5 % (en poids) d'eau.

**12.** Procédé selon la revendication 2, caractérisé en ce que, en tant que procédé de coulée de barbotine, on utilise le procédé de coulée de barbotine sous pression.

**13.** Procédé selon la revendication 1 ou 2, caractérisé en ce que, en même temps que la production de parois des corps moulés ou dans une étape intermédiaire, on produit des occupants de place, pour des pores de plus grande taille, par introduction d'un matériau, le matériau étant à nouveau éliminé dans des étapes subséquentes de traitement thermique.

**14.** Procédé selon la revendication 13, caractérisé en ce que, comme matériau occupant de la place, on utilise des carbonates d'ammonium, des sphérules de cire, des sphérules de matière plastique, de la sciure ou des particules de graphite.

**15.** Procédé selon la revendication 1 ou 2, caractérisé en ce que, après formation du corps moulé et avant le frittage, on soumet celui-ci à un processus de chauffage complet et de cokéfaction, à des températures inférieures à 600°C et sous vide.

**16.** Procédé selon la revendication 1, caractérisé en ce que l'on utilise de 0,5 à 5 % de carbone libre.

**17.** Procédé selon la revendication 1, caractérisé en ce que l'on utilise de 0,1 à 1,5 % d'additifs à base d'aluminium et/ou de bore.

**18.** Procédé selon la revendication 17, caractérisé en ce que les additifs présentent une surface spécifique de 10 - 20 $m^2$/g.

Fig.1

Fig.2

Fig.3